(19) Europäisches Patentamt
European Patent Office
Office européen des brevets

(11) **EP 2 051 199 A1**

(12) **EUROPEAN PATENT APPLICATION**

(43) Date of publication:
**22.04.2009 Bulletin 2009/17**

(51) Int Cl.:
***G06Q 30/00*** *(2006.01)*

(21) Application number: **08165164.8**

(22) Date of filing: **25.09.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS**<br><br>(30) Priority: **09.10.2007 US 869089** | (71) Applicant: **Novell, Inc.**<br>**Provo, Utah 84606-6169 (US)**<br><br>(72) Inventor: **Buss, Duane**<br>**West Mountain, UT 84651 (US)**<br><br>(74) Representative: **Hanna, Peter William Derek et al**<br>**Hanna Moore & Curley**<br>**13 Lower Lad Lane**<br>**Dublin 2 (IE)** |

(54) **System and method for representing standardized agreements as reputation**

(57)    System and method for representing agreements, under which computer network transactions (140) are to be implemented between two parties (102,104), as reputation, are disclosed. In one embodiment, the method comprises, in response to a request (110) to generate an assertion relating to a piece of content, regenerating a reputation statement concerning an agreement from reputation-forming information (RFI) associated with an agreement (115); and generating an assertion (112) from the reputation statement and the piece of content, the generating comprising binding the piece of content to the reputation statement.

Fig. 1

EP 2 051 199 A1

## Description

## BACKGROUND

Websites often use standardized agreements to form contracts with website visitors. The term "standardized" as used herein means the same agreement applies to every website visitor. For example, a website might use the same Terms of Use or Privacy Policy for every website visitor. Other examples of standardized agreements include, without limitation, service agreements, and end user license agreements.

Standardized agreements may be presented to a user when the user registers with the website, and the user's acceptance might be a prerequisite to using the website. Other times, the website agreements are merely provided as links on the website.

End users of software are also often required to accept End User License Agreements (EULA) upon installation of software. A clickwrap agreement, also known as a "clickthrough" agreement or clickwrap license, is a common type of agreement often used in connection with software licenses. Such agreements are often found on the Internet, as part of the installation process of software packages, or in other circumstances where agreement is sought using electronic media. The content and form of clickwrap agreements vary widely. Some clickwrap agreements require the end user to manifest his or her assent by clicking an "ok" or "agree" button on a dialog box or pop-up window. A user indicates rejection by clicking cancel or closing the window.

For purposes of the present disclosure, a drafting party is the party that provides an agreement to another party for acceptance. An average website visitor or end-user might not be familiar with some of the legal concepts and legal language used in a drafting party's standardized agreements. As a result, non-drafting parties may not understand how they may be affected by accepting the terms of such agreements. Other non-drafting parties may not want to read the standardized agreement, and might simply accept the agreement without reading the terms.

Further, non-drafting parties usually do not have any mechanism for requesting modifications to standardized agreements. Because such parties often accept the terms and conditions of standardized agreements without reading or understanding such terms and conditions, drafting parties have little motivation to respect non-drafting parties' rights. Further, a non-drafting party's lack of understanding with regard to an agreement generally is not an excuse with respect to acceptance. Any non-drafting parties that accept an agreement are bound to the terms of such agreement upon acceptance of the agreement. Thus, standardized agreements may include terms and conditions that strongly favor the drafting party. Further, no automated tools are currently available to assist visitors in evaluating standardized agreements.

One way to provide an incentive for drafting parties to respect the rights of non-drafting parties is to use a reputation-based system. Representing agreements in a reputation-based system and allowing non-drafting parties access to reputation information related to agreements will allow non-drafting parties to make more informed decisions about whether to enter into an agreement.

## SUMMARY

The present invention provides computer-implemented methods and systems for representing an agreement, under which computer network transactions are to be implemented between two parties, as reputation, in accordance with claims which follow. One embodiment is a method for representing an agreement as reputation. The method comprises, in response to a request to generate an assertion relating to a piece of content, generating a reputation statement concerning an agreement from reputation-forming information (RFI) associated with the agreement and generating an assertion from the reputation statement and the piece of content. The generating an assertion may include binding the piece of content to the reputation statement, and transmitting the assertion to a receiving entity.

## DESCRIPTION OF THE DRAWINGS

Fig. 1 is a diagram of an assertion system in accordance with one exemplary embodiment.
Fig. 2 is a flowchart illustrating operation of an assertion system in accordance with an exemplary embodiment.
Fig. 3 is a diagram of an assertion in accordance with an exemplary embodiment.

## DETAILED DESCRIPTION

An agreement may include one or more terms. Each term of an agreement may establish a separate reputation context. Further, the terms of an agreement may include, without limitation, terms relating to one or more of the following subjects: 1) right to modify an agreement, 2) personal or non-commercial use rights, 3) privacy rights, 4) confidentiality rights, 5) dispute resolution, 6) content submission, 7) unlawful conduct 8) improper use, 9) indemnification rights, 10) severability rights, 11) intellectual property rights, and 12) warranties. Some of these terms might have both a stated reputation context and a performance reputation context. However, it is also possible that some terms might not have any reputation context.

The stated reputation context is generally the reputation of the text of the agreement. For example, the stated reputation context of a warranty provision might depend on what kind of warranties a non-drafting party receives under the text of the agreement. The stated reputation context of a warranty provision that provides remedies for implied warranties, such as a warranty of merchantability and a warranty of fitness for a particular purpose, would be different from the stated reputation context of a warranty provision that disclaims all implied warranties.

The performance reputation context of an agreement, on the other hand, might depend on how a party performed in the past in transactions executed under the same or similar agreement. For example, the performance reputation context of a warranty provision of an agreement might depend on whether or not a party, in past transactions executed under the same or similar agreement, has performed in accordance with the warranty provision. The non-drafting party might be interested in whether a drafting party has ever breached any warranty provisions under the same or similar agreement. Further, a non-drafting party might be interested in whether the drafting party performed the remedies set forth in the warranty provision upon the drafting party's breach of the agreement.

Thus, an agreement may have reputation in several contexts. Accordingly, an agreement may be represented as reputation information in a reputation system. For example, an agreement may have an overall reputation context that is determined by the reputation context of each of the terms of the agreement. Thus, in one embodiment, the overall reputation context of an agreement may include one or more reputation contexts in a reputation system. In one embodiment, the terms of a licensing agreement, such as the GNU General Public License ("GPL"), are represented as reputation information in a reputation system. Further, the reputation information may come from multiple sources. One of the sources may be an "expert" source, and reputation information from the expert source may carry more weight than other reputation information providers. For example, in one embodiment, reputation information from the Open Source Initiative (OSI), an authority on Open Source licenses, may have a greater effect on determining the overall reputation context of an Open Source license than reputation information from other reputation information providers.

In another embodiment, the terms of service of an Internet Service Provider ("ISP") may be represented as reputation information in a reputation system. The various provisions of the terms of service, such as those relating to payment, arbitration, recurring payment, and cancellation, may each represent a different reputation context.

It should be understood that reputation is distinct from trust. Reputation can be one of the factors upon which trust is based, but reputation-based confidence can be orthogonal to trust relationships. Reputation can serve as an indication of individual assertions about past behavior that provides insight into potential future behavior.

In describing selected embodiments, various objects or components may be implemented as computing modules. These modules may be general-purpose, or they may have dedicated functions such as memory management, program flow, instruction processing, object storage, etc. The modules can be implemented in any way known in the art. For example, in one embodiment a module is implemented in a hardware circuit including custom VLSI circuits or gate arrays, off-the-shelf semiconductors such as logic chips, transistors, or other discrete components. One or more of the modules may also be implemented in programmable hardware devices such as field programmable gate arrays, programmable array logic, programmable logic devices or the like.

In an exemplary embodiment, one or more of the modules are implemented in software for execution by various types of processors. An identified module of executable code may, for instance, may include one or more physical or logical blocks of computer instructions that may, for instance, be organized as an object, procedure, or function. Further, the executables of an identified module need not be physically located together, but may include disparate instructions stored in different locations that, when joined logically together, include the module and achieve the stated purpose for the module. A "module" of executable code could be a single instruction, or many instructions, and may be distributed over several different code segments, among different programs, and across several memory devices. Similarly, operational data may be identified and illustrated in association with one or more modules, and may be embodied in any suitable form and organized within any suitable type of data structure. The operational data may be collected as a single data set, or may be distributed over different locations including over different storage devices, and may exist, at least partially, as electronic signals on a system or network.

In some embodiments, higher-level components may be used as modules. For example, one module may include an entire computer acting as a network node. Another module may include of an off-the-shelf or custom program, such as a database management system. These higher-level modules may be decomposable into smaller hardware or software modules corresponding to different parts of a software program and identifiable chips (such as memory chips, ASICs, or a CPU) within a computer.

One type of module is a "network." A network module defines a communications path between endpoints and may include an arbitrary amount of intermediate modules. A network module may encompass various pieces of hardware, such as cables, routers, and modems, as well the software necessary to use that hardware. Another network module may encompass system calls or device-specific mechanisms such as shared memory, pipes, or system messaging services. A third network module may use calling conventions within a computing module, such as a computer language or execution environment. Information transmitted using the network module may be carried upon an underlying protocol, such as HTTP, BXXP, or SMTP, or it may define its own transport over TCP/IP, IPX/SPX, Token Ring, ATM, etc. To assure proper transmission, both the underlying protocol as well as the format protocol may split the information into separate pieces, wrap the information in an envelope, or both. Further, a network module may transform the data through the use of one or more computing modules.

What constitutes a "party" or an "entity" may vary between embodiments. In one embodiment, the parties may be people interacting with the system. In an exemplary embodiment, the parties may be different systems that need to interact in an arm's-length transaction. A third embodiment may use computing modules as parties. A fourth embodiment may use more than one type of entity in the same transaction, such as a combination of the above noted exemplary entities.

Some portions of the embodiments of the present disclosure are described as "signed." What constitutes an adequate signature can vary between embodiments, as can the method of signing. Any signing protocol known in the art can be used, and the strength and quality of the guarantees made by the different signing protocols may vary. In general, the adequacy of a given signing method varies according to the ontology of the information provided. For example, one exemplary embodiment uses public/private key signing to make certain guarantees about the identities of the various parties, as described above. An exemplary embodiment uses a one-way hash to make guarantees about some content. For example, one embodiment uses a secure date time stamping algorithm to indicate the last time a certain piece of content was changed. Another embodiment uses a cryptographic signature to guard against later changes in some piece of content. A third embodiment uses a public/private key infrastructure to guarantee that a particular person created or distributed a particular piece of content. A fourth embodiment uses a computing module to provide key generation, random number generation, or signing services. In general, an embodiment may use a signing protocol to bind an arbitrary assertion to a piece of content. Further embodiments mix multiple signing protocols within the same cycle. An evaluation function may take the signing protocol into account when determining the overall value to assign to an assertion.

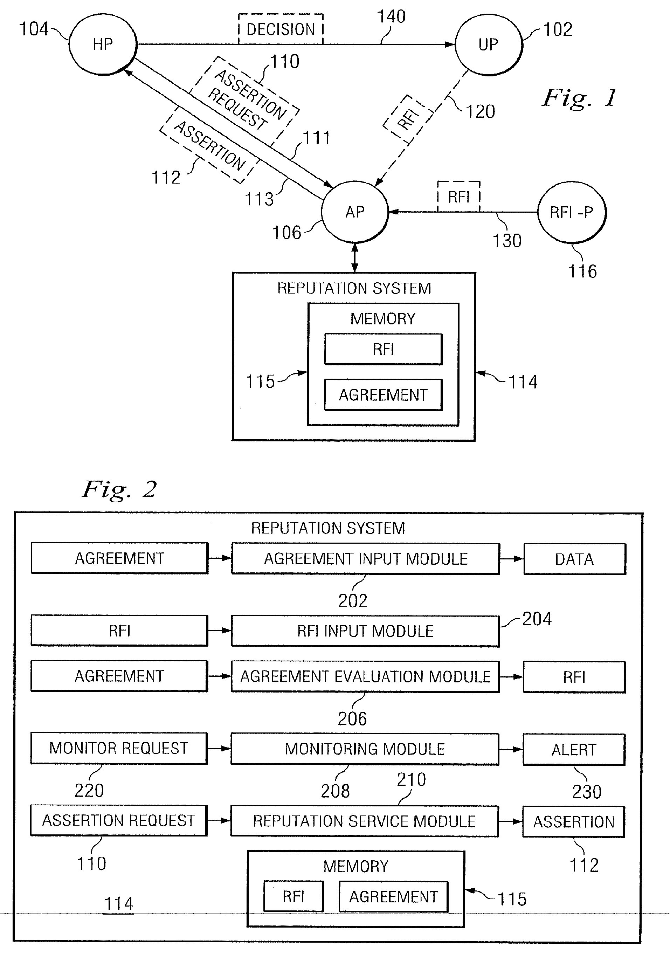

Fig. 1 illustrates a model reputation cycle in accordance with one embodiment of the present disclosure. A first entity, the unknown or unverified party (UP 102), desires to enter into an agreement with a second entity, the hesitant party (HP 104). For the purposes of the present description of the embodiments, UP 102 the drafting party and HP 104 is the non-drafting party. It should be understood that any of the roles described above can also be fulfilled through the use of an agent or proxy.

The roles described above are not mutually exclusive. In any given transaction, a party may fulfill any or all of these roles simultaneously or in turn. Several exemplary model reputation cycles will serve to illustrate different arrangements. Not all possible reputation cycles are described, and more than one model can be active at the same time in the same transaction. The embodiments described below are merely exemplary and are not meant to be limiting.

Before accepting the agreement, the HP 104 might want to use a reputation tool to investigate the reputation of the agreement. For example, in one embodiment the reputation tool is a browser plug-in or stand-alone application that is configured to communicate with an asserting party (AP 106). Using the reputation tool, the HP 104 sends an assertion request 110 to the AP 106, as illustrated by arrow 111. In one embodiment, the assertion request 110 includes an identifier, such as a Uniform Resource Identifier (URI), a Uniform Resource Locator (URL), or the actual text of the agreement or a portion of the agreement. Upon receiving the assertion request 110, the AP 106 may use the identifier to determine whether the AP 106 possesses any reputation information associated with the identifier. In one embodiment, the AP 106 might need to reformat the identifier. For example, the AP 106 might remove certain formatting or other non-content-related elements of the identifier. The browser plug-in embodiment may be useful to users that want to avoid websites that enforce policies that they do not agree with. For example, in one embodiment, the browser plug-in notifies the user when the user navigates to a website that does not allow the use of adblocking software.

An assertion 112 is one or more statements of fact or opinion concerning the UP 102. In response, the AP 106 returns one or more assertions 112 to the HP 104, as illustrated by arrow 113. The AP 106 bases the assertions 112 on reputation-forming information (RFI) related to the UP 102 that is in the AP's 106 possession. In one embodiment, the AP 106 includes a reputation system 114 that provides the AP 106 with RFI. The AP 106 may also receive RFI from the UP 102 or a RFI-provider 116. The RFI-provider 116 optionally includes a reputation system (not shown).

A reputation system 114 includes a memory 115 having one or more pieces of RFI related to one or more agreements. In one embodiment, an agreement as represented in a reputation system 114 includes the full text of an agreement. In another embodiment the agreement is represented by a URI link to the full text of an agreement. In another embodiment, a URI link identifies a subscription service that provides the reputation system 114 with the full text of an agreement or URI links to the full text of an agreement.

Once an agreement is represented in the reputation system 114, the UP 102 and the RFI-provider 116 provide AP 106 with RFI related to the agreement, as illustrated by arrows 120 and 130 respectively. Such RFI may include, without limitation, stated reputation and performance reputation. In one embodiment, the reputation system 114 optionally includes facilities for automatically evaluating an agreement using a module preconfigured to provide RFI based on the stated context and the performance context of the drafting party with respect to other agreements. In another embodiment, the AP 106 include a monitoring service that enables reputation-seeking entities to monitor reputation changes. Monitoring may be useful in situations where a provider of services or goods retains information about a customer. For example, a cellular phone service provider might require a customer to provide personal information upon activation of the service. After the subscriber terminates, the service provider might retain certain information about the subscriber. The subscriber might monitor the service provider's reputation to assure himself of the safety of his information. Another scenario where monitoring may be useful is the situation where a party to an agreement changes its operational policies in order to comply with new laws. The party's reputation might change as a result of compliance or non-compliance with the new law.

Further, the AP 106 also includes a reputation service that enables HP 102 and other reputation-seeking entities to submit assertion requests 110. Assertions 112 contain RFI in the form of structured or unstructured information that the AP 106 can use to make an assertion 112. This information may be numeric, tagged, binary, free-form, or in some other format. In one embodiment, after the HP 102 receives the assertions 112, the HP 102 reviews the assertions 112 for completeness. For example, the assertions 112 might relate to only a portion of the agreement. In another embodiment, the HP 102 requests additional assertions 112 from another AP 106 with respect to the remaining portions of the agreement.

An entity in possession of an assertion evaluates the strength of an assertion using a variety of embodiment-specific evaluation models. Depending on the strength of the assertion, different embodiments use the provided assertions for various tasks. In one embodiment, the HP 104 uses the assertion 112 to decide whether or not to enter into an agreement. In other exemplary embodiments, a drafting party seeks assertions 112 in order to monitor the reputation of its agreements. In another embodiment, other reputation systems seek assertions 112 in order to aggregate RFI from several different sources.

The roles described above are not mutually exclusive; in any given transaction, a party may fulfill any or all of these roles simultaneously or in turn. Several exemplary embodiments will serve to illustrate different arrangements. Not all possible embodiments are described, and more than one model can be active at the same time in the same transaction. The embodiments described below are merely exemplary and are not meant to be limiting.

Referring now to Fig. 2, an exemplary embodiment of a reputation system 114 includes a memory 115 having RFI and agreement data. The embodiment includes the following modules: 1) an agreement input module 202, 2) an agreement evaluation module 206, 3) an RFI input module 204, 4) a monitoring module 208, and 5) a reputation service module 210. In a second embodiment the reputation system 114 includes an optional commenting module (not shown) that receives feedback or other explanations related to RFI.

An exemplary embodiment of the agreement input module 202 takes one or more inputs, that in some embodiments includes an agreement, and outputs a data representation of the agreement. A function of the input module is to model input agreements as data that is stored in the reputation system 114. In one embodiment, each input agreement is a distinct version of the agreement. Thus, in one embodiment, several versions of the agreement may co-exist in the reputation system 114. There are many methods of entering an agreement into the agreement input module 202. For example, in one embodiment, a user utilizing an input device, such as a keyboard, inputs agreements into the agreement input module. In a second embodiment, a user uses a scanner in combination with optical character recognition (OCR) software to enter the text of paper agreements into the agreement input module 202. In a third embodiment, a user submits an identifier, such as a URL or URI to the reputation system 114. The input module 202 uses the identifier to retrieve the agreement, normalize the agreement, and create a version of the agreement.

One embodiment includes an automated method of identifying and entering agreements into the agreement input module 202 using automated software applications, including, without limitation, bots and crawlers, that are configured to analyze network resources that represent agreements. In one exemplary embodiment, an automated software application traverses the web pages in website directories to identify the website's privacy policy or terms of use. In a second embodiment, an automated software application is communicably coupled to a subscription feed configured to deliver electronic links to agreements. After receiving an electronic link to an agreement, the automated software application retrieves the content of the agreement from the electronic link and submits the contents to the agreement input module 202. In a third embodiment, an automated software application is communicably coupled to a search engine. The automated software uses the search engine to identify agreements available on a network, including, without limitation the Internet, a wide area network (WAN), and a local area network (LAN). Alternatively, the automated software uses the search engine to identify agreements available on a computer-readable medium, including, without limitation, a memory stick, memory, a hard disk drive, and a network area storage (NAS). Upon identifying an agreement, the automated software retrieves the content of the agreement and inputs the contents into the agreement input module 202.

A second exemplary embodiment of identifying and entering agreements includes a mechanism for an entity to submit agreements to the agreement input module 202. For example, one embodiment of the agreement input module 202 includes an interface, such as a web page or webservice, that enables entities to submit agreements. In a third embodiment, the agreement input module 202 receives a subscription feed from a subscription module configured to send data representations of agreements.

Further, various embodiments of the agreement input module 202 may be configured to accept agreements that have been digitally "signed" by the drafting party. "Signed" in this context means making certain guarantees about the identities of the various parties, and does not mean the mechanism of accepting an agreement. Digital signatures enable the agreement input module 202 to confirm the identity of an entity submitting an agreement. Further, the agreement input module 202 might be configured to identify agreements that have been digitally signed by the drafting party, and treat such agreements differently from agreements submitted by non-drafting parties.

An embodiment of the RFI input module 204 takes one or more inputs, possibly including RFI, and does not provide any output. A function of the RFI input module 204 is to receive RFI from RFI sources, such as the UP 102 and the RFI-provider 116, and store the RFI in the reputation system 114. There are many methods of entering RFI into the RFI input module 204. In one embodiment, a user utilizing an input device, such as a keyboard, inputs RFI into the RFI input module. In a second embodiment, a user could also use a scanner in combination with optical character recognition (OCR) software to enter the text of paper-based RFI into the RFI input module 204.

A third embodiment includes an automated method of identifying and entering RFI into the RFI input module 204 using automated software applications, including, without limitation, bots and crawlers, that are configured to analyze network resources that represent RFI. In further embodiments, many of the automated software application embodiments set forth above with respect to inputting agreements to the agreement input module 202 are also used to provide RFI input to the RFI input module 204.

A fourth embodiment includes a method for an entity to submit RFI to the RFI input module 204. For example, the RFI input module 204 includes an interface, such as a web page or webservice, that enables entities to submit RFI.

In a further embodiment, the RFI input module 204 is configured to accept RFI that has been digitally "signed" by the drafting party. Once again, "signed" in this context means making certain guarantees about the identities of the various parties, and does not mean the mechanism of accepting an agreement. Digital signatures enable the RFI input module 204 to confirm the identity of an entity submitting RFI. In one embodiment, the RFI input module 204 is configured to identify RFI that has been digitally signed by a non-drafting party, and treats such RFI differently from RFI submitted by a drafting party.

It is appreciated that reputation information, including assertions and RFI, can be complex. For example, RFI may come from prior transactions, personal or institutional knowledge, numerical analysis, paid relationships, group associations, etc. Thus, a piece of content may be bound to more than one piece of reputation information. For example, a piece of content may have reputation information related to general reputation about a drafting entity and contractual breaches by an entity. An assertion may include some, all, or none of the supporting RFI, and the format of RFI may be transformed for different consumers. It is appreciated that different embodiments may use different forms of RFI with differing levels of formality. For example, one embodiment uses a defined XML vocabulary to precisely define certain terms; adherence to the vocabulary is necessary for information to be considered valid. Enforcement of the vocabulary is accomplished by using a validating parser to evaluate both RFI and final assertions. A second embodiment uses mixed structured and unstructured content. For example, in one embodiment a company and its affiliates create and distribute RFI and assertions about service agreements. This information includes structured statistics as well as unstructured commentary and analysis. A third embodiment uses multiple RFI providers or asserters and bundles them into a single assertion. Continuing the services agreement example, the statistics could be provided by an industry consortium; the company could provide the commentary and analysis. A fourth embodiment uses only free-form RFI and assertions. For example, a software end-users may give impressions and feedback about various end user licenses without using any formally defined schema. Other embodiments may use different levels of structure at different points in the reputation cycle. Unstructured assertions may be more suitable for interactive (human-based) evaluation, while structured assertions and structured RFI data may be more suitable for machine evaluation.

Given these various contexts, there is no inherent limit on the information that can be bound with content. For example, various embodiments can include reputation information structured as boolean values, strings, histories, dates, date ranges, associative arrays, lists, or sets. This information can be free-form or embedded within a binary protocol or another structured format such as XML. One embodiment, for example, uses XML-RPC or SOAP to format and package arbitrary data. Evaluation is accomplished via parsing the data and using rules or functions to process the data contained therein. A second embodiment uses domain-specific formats, such as HDF; evaluation is accomplished using a module that uses the domain-specific format. A third embodiment uses S-Expressions to define both data and directives. Evaluation of the S-Expressions uses a Read-Eval-Print (REPR) loop; various macros may be defined that transform parts of the directives or data in arbitrary ways. A fourth embodiment uses one or more computing modules to maintain the data. For example, the information may be stored in tables using an embeddable database module; a serialization format allows the transmission of database content across the wire. Evaluation is accomplished via creating or updating an in-memory database image and querying the database for values. A fifth embodiment mixes several formats and types of evaluation in the same cycle. A sixth embodiment uses a format that is self-identifying as to the type of reputation data provided and its structure.

Further, there is no particular requirement that only reputation information be bound with a particular piece of content. Other embodiments embed other restrictions or pieces of information within an assertion. In one embodiment, an assertion from "upstream" is incorporated in whole or in part into the current assertion. In a second embodiment, these other restrictions affect guarantees made by the AP. For example, one embodiment embeds restrictions concerning the delivery of the larger incorporating assertion. These restrictions, translated into English, can include statements such as "this assertion must be delivered over a channel encrypted via SSL," "this assertion must be delivered from [URI]," "this assertion is only valid within 12 hours of [date/time]," and "this assertion must be confirmed by the confirming authority at [URI]." Other assertions specify the context of the request. One embodiment accomplishes this by extending a SAML assertion with new conditions and expressions. The interpretation of the new conditions and expressions is controlled by a publicly accessible schema. Possible conditions and expressions include "DeliveryRestriction," "RetrievedFrom," "PathContext," etc. Clients are able to interpret these directives according to the schema and so receive meaningful information about outside information relevant to a particular assertion. This allows assertions to be read and processed in other contexts without creating the possibility of unauthorized reuse. For example, in one embodiment a web security auditor provides assertions about the security of a particular audited site. As part of those assertions, the auditor includes the delivery restriction that the assertion is only valid if it is retrieved from the domain associated with the site being audited, and if it is being retrieved with the content to which it has been bound.

Assertions 112, RFI, and other statements may be provided in alternate forms. For example, one embodiment uses a proprietary assertion language. A second embodiment provides the statements in a raw form, with all processing done by the requesting party. A third embodiment provides anonymized, collated, or otherwise processed information.

In some embodiments, one or more parts of a reputation are numerically defined. For example, one embodiment evaluates reputation data using the function

$$R_A = F(R_{RS}, S(A_{RFI})),$$

where R is reputation, A is an agreement, RS is the reputation system 114, S is the strength of an assertion 112, and RFI is the reputation-forming information giving rise to that assertion 112. Although this reputation is calculated, the result may not be a single number. For example, one embodiment returns a vector of values. Other embodiments include a trust value between the requesting entity and the reputation system 114 or different values based on the type of assertion 112.

In an exemplary embodiment, the strength of a reputation or an assertion 112 is evaluated using a "web of confidence" model. In one embodiment of this model, reputation connections are considered as edges in a graph. The minimum distance between two nodes (parties) is calculated, using the inverse of previously defined confidence levels as the traversal cost, with a minimum confidence threshold being interpreted as a maximum traversal cost. The result of graph analysis or traversal is then applied to reputation systems 101. The results of that transaction, as well as the consequent increase or decrease in confidence, can then affect the web of confidence using a back-propagation model.

In a second embodiment, a community-connectedness model is used to evaluate the strength of an assertion 112 or a reputation. This model uses social network analysis to weight assertions 112 based upon the degrees of connectedness between the UP 102 and some other set of parties. Assertions 112 concerning highly-connected UP 102 can be more confidence-generating.

RFI-provider 116 might include one or more experts. Experts possess some expertise or knowledge that makes their RFI more credible than RFI provided by non-experts. For example, an attorney associated with the Electronic Privacy Information Center (EPIC) may be considered an expert with respect to a privacy policy agreement. Accordingly, RFI from an EPIC attorney might be considered more credible than RFI received from a general end-user who has no legal background. Likewise, an EPIC attorney might not be considered an expert with respect to other types of agreements, such as a commercial services agreement. In one embodiment, a reputation system 114 administrator confers the distinction of "expert" upon the RFI-provider 116 after validating the RFI-provider's 114 credentials. In one embodiment, the determination of whether an entity is an "expert" is systematically determined by another reputation system 114 that provides assertions 112 as to "expert" credentials.

An embodiment of the agreement evaluation module 206 takes one or more inputs, which may include an agreement, and outputs RFI. A function of the evaluation module 206 is to produce RFI based upon an automated evaluation of the agreement. In one embodiment, an expert system compares the text of the agreement being evaluated with the text of other agreements that have already been evaluated by humans, so as to identify textually similar provisions. The evaluation module 206 then generates RFI that is a function of the similarity of provisions and the results of human evaluations of such similar provisions. The evaluation module 206 may evaluate one or more reputation contexts of an agreement. Thus, an agreement will at least be associated with RFI based on an automated evaluation, even if a reputation system 114 does not receive RFI associated with the agreement from any other source (such as RFI-P 114 or UP 102).

In one embodiment, the evaluation criteria of the evaluation module 206 includes evaluation of all reputation in all contexts associated with an agreement. In a second embodiment, the evaluation module 206 limits evaluation to certain contexts. For example, one embodiment of the evaluation module 206 only evaluates the privacy provisions of the agreement.

In a third embodiment, the evaluation module 206 generates RFI based on related contexts associated with other agreements. The other agreements may have been drafted by the same entity that drafted the agreement being evaluated. Alternatively, the other agreements may have been drafted by other entities. For example, in this embodiment, the evaluation module 206 generates RFI for the privacy provisions of an agreement by comparing the privacy provisions of the evaluated agreement with the privacy provisions of other agreements.

In a further embodiment, the evaluation module 206 generates RFI based on related contexts associated with the same entity. For example, the evaluation module 206 compares how an entity has performed in the past with respect to similar agreements. In addition to using RFI already stored on the reputation system 114, some embodiments of the evaluation module 206 also obtain RFI from other RFI sources, such UP 102 and RFI-provider 116.

One embodiment of the monitoring module 208 takes one or more inputs, which may include a monitor request 220 and outputs alerts 230. A function of the monitoring module 208 is to process monitor requests 220, monitor reputation, and alert outside entities of changes to an agreement, or changes to an agreement's reputation. The alert 230 may be an e-mail, SMS text message, automated phone-call, or any other method of sending notice to an entity. The monitoring module 208 enables entities to monitor the reputation of an agreement. For example, a drafting entity might want to make changes to an agreement in response to changes in reputation. Alternatively, an entity may wish to receive an alert 230 whenever the reputation of an agreement or the reputation of a drafting entity changes. In some jurisdictions, changes to online agreements become enforceable once the changes are posted to the website, even if users are not notified of the change. Thus, an entity may also be interested in monitoring when the text of an agreement changes.

In one embodiment, the entity that wishes to receive an alert 230 sends a monitor request 220 to an interface configured to receive monitor requests 220. One exemplary interface is a webpage or webservice that is accessible by the entities. In one embodiment, a monitor request 220 includes an agreement, a list of monitoring criteria, and an expiration term. Monitoring criteria includes, without limitation, agreement changes and reputation changes. Agreement changes are changes to the agreement, and reputation changes are changes in reputation with respect to the agreement. For example, if an entity sends a monitor request 220, with reputation changes as the monitoring criterion, with a one-year expiration term, then the monitoring module 208 will monitor the reputation of the agreement associated with the agreement identification for one year, and send an alert 230 to the entity whenever the reputation of the agreement changes during the year. It should be understood that monitoring criteria could also include monitoring of reputation with respect to related contexts, such as changes in reputation of similar agreements or similar drafting entities.

An embodiment of the reputation service module 210 takes one or more inputs, which may include an assertion request 110, and outputs an assertion 112. A function of the reputation service 208 is to respond to entities' requests for assertions 112. The assertion request 110 includes information that will help the reputation service 208 identify the agreement. Such information might include the actual text of an agreement, a URI link to the text of an agreement, identification of the drafting-party, a token identifying the agreement or any other mechanism for identifying an agreement, and other parameters to be used to generate the assertion. A token, as used herein, is generally a descriptor of information that includes any combination and number of possible components.

In one embodiment, a web-browser plug-in installed on an entity's computer is configured to interact with the reputation service module 210. For example, an entity uses the plug-in to send an assertion request 110 to the reputation service module 210. In another embodiment, the web-browser plug-in is also configured to automatically send an assertion request 110 to the reputation service 208 when the entity enters a URI into the browser that is linked to an agreement, such as a privacy policy or terms of use for a website. In one embodiment, the web-browser plug-in is configured to automatically determine whether a website page currently being viewed is related to an agreement. For example, when a user browses the product pages of an online store, the plug-in may retrieve and display the reputation for the terms of use of the online store as well as the reputation of the online store. The forgoing embodiment may be useful in jurisdictions where contractual terms and conditions are enforceable even if a website visitor is required to click on a hyperlink to access the terms and conditions.

In another embodiment, the software installed on the entity's computer is a stand-alone software application. In such an embodiment, the stand-alone software automatically sends an assertion request 110 to the reputation service 208. For example, any time a user encounters a web page with an agreement, the software sends an assertion request 110 to the reputation service 208. In a second embodiment, every time a user encounters a shrink-wrap licensing agreement, such as when a user installs software on the computer, the software sends an assertion request 110 to the reputation service 208. In a third embodiment, the software is a service running on the operating system of the entity's computer.

After receiving an assertion 112 from the reputation service 208, the client-side software may display the contents of the assertion 112 to the user. The software may be configured to simply pass the assertions as received from the reputation service 208 to another module or software for processing. Alternatively, the software may manipulate, perform calculations, or generate new assertions 112 based upon the assertions 112 received from the reputation service 208.

Upon receiving an assertion, the HP 104 evaluate the assertion using a number of evaluation models. In one embodiment, the HP 104 includes a client-side software configured to evaluate the assertion using an evaluation model. Embodiments of evaluation models include without limitation: 1) a complete context evaluation model, 2) a partial context evaluation model, 3) a relationship-based evaluation model, 4) a related-parent evaluation model, 5) a provider-based evaluation model, 6) a related-reputation evaluation model, 7) a multiple source evaluation model, 8) a stated-performance evaluation model.

An embodiment of the complete context evaluation model evaluates an assertion 112 upon all reputations in all contexts associated with an agreement. In one embodiment of a complete context evaluation model, the stated reputation context of every provision in the agreement is a component of the evaluation. Another embodiment evaluates the performance reputation context of the drafting party in addition to evaluating the stated reputation context of every provision of an agreement.

Alternatively, a partial context evaluation model only evaluates certain contexts associated with an agreement. For example, in one embodiment, a partial context evaluation model only considers the reputation of the privacy provisions of an agreement. In another embodiment, a partial context evaluation model considers only the reputation of a subset of provisions of an agreement.

An embodiment of the relationship-based evaluation model evaluates an assertion 112 upon a circle of trust. In one embodiment of the relationship-based evaluation model, the HP 104 designates certain entities as members of a circle of trust. Reputation information associated with a member of the circle of trust is given more weight than reputation information associated with an entity that is not a member of the circle of trust. For example, if the HP 104 has relied on the AP's 106 assertions 112 in the past, and the AP's 106 assertions were accurate, then HP 104 might add the AP 106 to its circle of trust. Alternatively, the HP 104 might remove the AP 106 from his circle of trust if the AP 106 provides him inaccurate assertions 112. In a second embodiment, the HP 104 includes RFI-providers 114 in the circle of trust. Accordingly, RFI information provided by a RFI-provider 114 in the circle of trust might be given more weight than RFI information provided by a RFI-provider 114 that is not in the circle of trust. In one embodiment, the AP 106 determines an aggregate reputation based on the RFI information from RFI-providers 114 in the circle of trust and RFI-providers 114 that are not in the circle of trust. In a second embodiment, the AP 106 discloses how much weight each individual RFI-provider 114 carries in determining the aggregate reputation. In a third embodiment, the HP 104 may evaluate the aggregate reputation and the RFI provided by each individual RFI-provider.

An embodiment of the related-parent evaluation model evaluates an assertion 112 upon related contexts associated with a parent entity. For example, in one embodiment, the related-parent evaluation model evaluates the performance reputation of the parent of the drafting party with respect to similar agreements. For example, if the drafting party is a subsidiary of a parent entity, the related-context model might compare stated reputation of privacy provisions of the parent entity with the privacy provisions of the subsidiary. In a second embodiment, the related-context evaluation model compares the performance reputation of a child entity's privacy provisions with the performance reputation of the parent entity's similar agreements.

An embodiment of the provider-based evaluation model evaluates an assertion 112 upon the expert level of a submitting entity. In one embodiment, the provider-based assertion module evaluates an assertion 112 upon whether the RFI was submitted by an acknowledged expert, a random commenter, or an automated evaluation. For example, in an embodiment, an assertion based upon RFI submitted by an acknowledged expert is given more weight than an assertion based upon RFI submitted by a random commenter or an automated evaluation.

An embodiment of the related-reputation evaluation model evaluates an assertion 112 upon comparison of an agreement's reputation with related reputations. In one embodiment, the related reputation criteria includes a backing entity's reputation. In a second embodiment, the related reputation criteria includes the reputation of other versions of the agreement.

An embodiment of the multiple-source evaluation model evaluates an assertion 112 by comparing reputation information from multiple sources. In one embodiment, the reputation information received from the AP 106 is compared to reputation information received from a different reputation system. The evaluation may consider reputation information aggregated from any number of reputation systems. In a second, the reputation of each reputation system is a factor that affects the weight given to reputation information received from each reputation system.

An embodiment of the stated-performance evaluation model evaluates an assertion 112 by comparing what the agreement says versus what has actually happened in the past with respect to an agreement. A stated-performance evaluation module would be useful to an entity that wants to compare how another entity has performed in the past with respect to the stated terms of an agreement.

If the user is satisfied with the assertion, the user can make a decision about whether to accept the agreement. Alternatively, if the user is not satisfied, the user might request assertions from other reputation systems or perform other research with respect to the agreement.

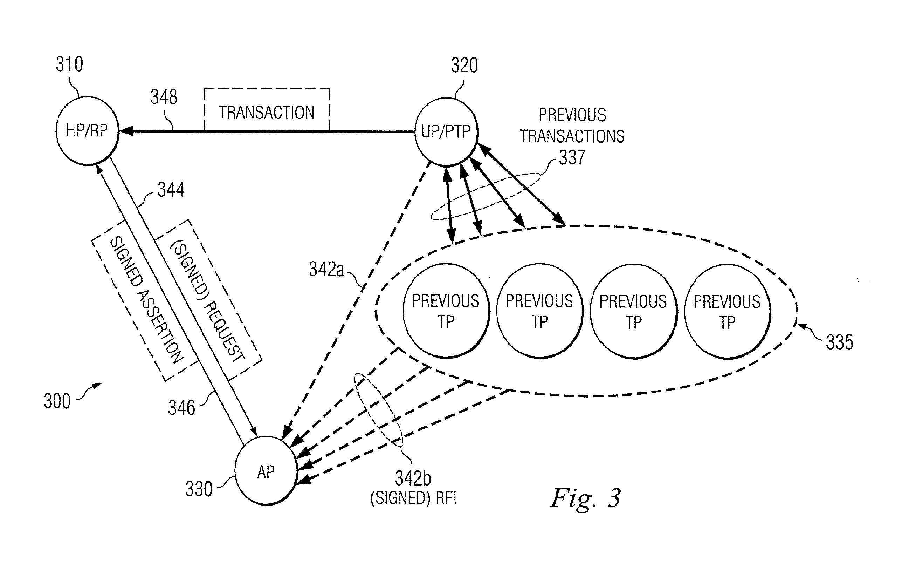

Fig. 3 illustrates a model reputation cycle 300 in accordance with an embodiment of the present disclosure. As shown in Fig. 3, two entities 310 and 320 are collectively TPs and start out as an HP and a UP, respectively. In this embodiment, the UP 320 has had past transactions with other parties, referred to herein as previous TPs 335, as represented by arrows 337. Both the previous TPs 335 as well as the UP 320 can provide (optionally signed) RFI to the third party AP 330, as represented by arrows 342a, 342b. The entities 310, 320, 330, can then continue the reputation cycle as described previously. In particular, the HP 310 makes an (optionally signed) request for an assertion, as represented by an arrow 344, which the AP 330 signs and provides, as represented by an arrow 346. The HP 310 and UP 320 become a relying party (RP) and a provisionally-trusted-party (PTP), respectively, and continue with the transaction using the assertion as an input, as represented by an arrow 348.

The use of multiple sources of RFI in Fig. 3 has several possible effects. First, the use of RFI from multiple sources serves to put a particular assertion in context. A reputation exists in the context of a community, and the penalty for making false claims, giving unjustified ratings, or giving false endorsements can vary from community to community. In one embodiment, an RFI-source-weighting model is used that takes into account the sources of RFI and implicit or explicit knowledge about the structure of the RFI-providing community.

Second, an RP may have higher confidence in assertions that are generated using more sources of RFI. Because repeated behavior is one possible cue about future conduct, consistent RFI from multiple parties can be relevant to proposed transactions. In one embodiment, a weighting system is used during evaluation to make quantitative and qualitative judgments about the confidence generated by certain assertions, based in part on the number of times fourth parties give consistent RFI to the AP 330. Alternatively, multiple transactions in the past, even with the same entity, may give rise to different amounts of confidence about different assertions.

Third, RFI generated by fourth parties, such as the previous TPs 335, may use "confidence chaining" such that it can be used as a surrogate assertion. In one embodiment, for example, an HP may become an RP based not on the assertion of the evident asserting party, but rather on the assertion of someone farther up the chain of RFI. These fourth-party sources of RFI do not necessarily have to be connected with the UP 320. In an embodiment, for example, the AP 330 is not known to the HP. However, the AP 330 itself uses a fourth party credentialing authority to certify its signature. The HP can become an RP based upon its confidence in the fourth-party credentialing authority. In cases in which there is no information directly provided by the UP, the AP itself can provide the content binding about the third party UP. In another embodiment, fourth party sources of RFI provide feedback and opinion-related RFI related to the AP 330.

Once an agreement is represented as reputation, non-drafting parties will be able to make more informed decisions about whether to enter into an agreement. Further, potential negative reputation representation of an agreement will encourage drafting parties to not draft oppressive or unconscionable agreements.

Although the present disclosure has described embodiments relating to specific networking environments, it is understood that the apparatus, systems and methods described herein could applied to other environments.

## Claims

1. A computer-implemented method for representing an agreement, under which computer network transactions are to be implemented between two parties (102,104), as reputation, the method comprising:

   in response to a request (110) from one of the two parties to a third party (106) to generate an assertion relating to a piece of content, regenerating a reputation statement concerning an agreement from reputation-forming information (RFI) associated with an agreement (115); and generating an assertion (112) from the reputation statement and the piece of content, the generating comprising binding the piece of content to the reputation statement.

2. The method of claim 1 further comprising transmitting the assertion (112) to a receiving entity (104), optionally wherein the receiving entity is a drafting party of the agreement.

3. The method of claim 1 wherein the RFI is provided by one of an automated process (120), an expert (116), or is provided from multiple sources (335).

**4.** The method of claim 1 wherein at least one of the RFI, the agreement, or a portion of the assertion is signed.

**5.** The method of claim 1 wherein the agreement comprises a plurality of portions, and generating an assertion further comprises evaluating RFI related to one or more of the plurality of portions.

**6.** The method of claim 1, further comprising;

monitoring the RFI associated with the agreement and alerting an entity when the RFI associated with the agreement changes, and/or monitoring the agreement and alerting an entity when the agreement changes.

**7.** The method of any one of claims 1 to 6, further comprising the steps of:

receiving an assertion (112) bound to a piece of content, wherein the assertion presents information associated with an agreement; evaluating (206) the assertion to produce an intermediate result; and using the intermediate result to modify a reputation value associated with the agreement.

**8.** The method of claim 7 wherein the evaluating (206) the assertion is performed using at least one of a complete context evaluation model, a partial context evaluation model, a relationship-based evaluation model, a related context evaluation model, a provider-based evaluation model, a related-reputation evaluation model, a multiple-source evaluation model (300), a stated-performance evaluation model, a web-of-confidence model, a community-connectedness model, and a confidence-chaining model.

**9.** The method of claim 7 wherein a portion of the assertion is signed (346).

**10.** The method of claim 7 further comprising presenting the reputation value associated with the agreement.

**11.** A system (114) for representing an agreement, under which computer network transactions (140,348) are to be implemented between two entities, as reputation, the system comprising:

a computer network coupling first (102,320), second (104,310), and third entities (106,330), wherein the first entity is adapted to:

receive an assertion request (110) specifying a piece of content and an agreement associated with the second entity; generate a reputation statement from reputation-forming information (RFI) associated with the agreement; generate an assertion by associating the piece of content with the reputation statement; and transmit (112) the assertion; and

wherein the third entity is adapted to:

receive the assertion; evaluate (206) the assertion to produce an intermediate result; and use the intermediate result to modify a reputation value associated with the second entity.

**12.** The system of claim 11 wherein a portion of the assertion is signed (346).

**13.** The system of claim 11 wherein the RFI is provided by one of an automated process (120) and a fourth entity (116), optionally an expert, or is provided from multiple sources (335).

**14.** The system of claim 11 wherein the evaluating (206) the assertion comprises using least one of a complete context evaluation model, a partial context evaluation model, a relationship-based evaluation model, a related context evaluation model, a provider-based evaluation model, a related-reputation evaluation model, a multiple-source evaluation model (300), a stated-performance evaluation model, a web-of-confidence model, a community-connectedness model, and a confidence-chaining model.

**15.** The system of claim 11 wherein the first entity is further adapted to monitor (208) the RFI associated with the agreement and alerting at least one of the first, second and third entities when the RFI changes.

*Fig. 1*

*Fig. 2*

Fig. 3

Europäisches
Patentamt

European
Patent Office

Office européen
des brevets

**EUROPEAN SEARCH REPORT**

Application Number

EP 08 16 5164

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | MARTIN BOLDT ET AL: "Preventing Privacy-Invasive Software Using Collaborative Reputation Systems" SECURE DATA MANAGEMENT; [LECTURE NOTES IN COMPUTER SCIENCE], vol. 4721, 6 September 2007 (2007-09-06), pages 142-157, XP019101004 ISBN: 978-3-540-75247-9 * the whole document * | 1-15 | INV. G06Q30/00 |
| L | US 2002/046041 A1 (LANG KEN [US]) 18 April 2002 (2002-04-18) * the whole document * | 1-15 | |
| L | US 2006/095404 A1 (ADELMAN WARREN [US] ET AL) 4 May 2006 (2006-05-04) * the whole document * | 1-15 | |
| L | US 2006/179113 A1 (BUCKINGHAM JAY T [US] ET AL) 10 August 2006 (2006-08-10) * the whole document * | 1-15 | |
| L | PAPAIOANNOU T G ET AL: "An incentives' mechanism promoting truthful feedback in peer-to-peer systems" CLUSTER COMPUTING AND THE GRID, 2005. CCGRID 2005. IEEE INTERNATIONAL SYMPOSIUM ON CARDIFF, WALES, UK MAY 9-12, 2005, PISCATAWAY, NJ, USA,IEEE, vol. 1, 9 May 2005 (2005-05-09), pages 275-283, XP010863620 ISBN: 978-0-7803-9074-4 * the whole document * | 1-15 | TECHNICAL FIELDS SEARCHED (IPC) G06Q G06F |

The present search report has been drawn up for all claims

| Place of search | Date of completion of the search | Examiner |
|---|---|---|
| Munich | 3 February 2009 | Bauer, Rodolphe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 16 5164

This annex lists the patent family members relating to the patent documents cited in the above-mentioned European search report.
The members are as contained in the European Patent Office EDP file on
The European Patent Office is in no way liable for these particulars which are merely given for the purpose of information.

03-02-2009

| Patent document cited in search report | Publication date | Patent family member(s) | Publication date |
|---|---|---|---|
| US 2002046041 A1 | 18-04-2002 | NONE | |
| US 2006095404 A1 | 04-05-2006 | US 2008021890 A1 | 24-01-2008 |
| US 2006179113 A1 | 10-08-2006 | NONE | |

For more details about this annex : see Official Journal of the European Patent Office, No. 12/82